## Europäisches Patentamt

## European Patent Office

## Office européen des brevets

(11) Veröffentlichungsnummer: **0 110 341**
**B1**

(12) **EUROPÄISCHE PATENTSCHRIFT**

(45) Veröffentlichungstag der Patentschrift:
**19.02.86**

(21) Anmeldenummer: **83111803.9**

(22) Anmeldetag: **25.11.83**

(51) Int. Cl.⁴: **A 22 C 11/02,** A 22 C 11/00,
A 22 C 13/02

(54) **Verfahren und Vorrichtung zum Öffnen, axialen Raffen und Abtrennen von dünnwandigem Schlauchhüllenmaterial und zum anschliessenden Überführen der dadurch gebildeten Raupen an eine Weiterverarbeitungsstelle.**

(30) Priorität: **29.11.82 DE 3244085**

(43) Veröffentlichungstag der Anmeldung:
**13.06.84 Patentblatt 84/24**

(45) Bekanntmachung des Hinweises auf die Patenterteilung:
**19.02.86 Patentblatt 86/8**

(84) Benannte Vertragsstaaten:
**AT BE CH DE FR GB IT LI NL SE**

(56) Entgegenhaltungen:
**EP - A - 0 068 190**
**DE - A - 2 941 872**
**FR - A - 1 320 789**
**FR - A - 2 390 336**
**FR - A - 2 395 893**

(73) Patentinhaber: **Kollross, Günter, Am Wallerstädter Weg 20, D-6080 Gross Gerau-Dornheim (DE)**

(72) Erfinder: **Kollross, Günter, Am Wallerstädter Weg 20, D-6080 Gross Gerau-Dornheim (DE)**

(74) Vertreter: **Beyer, Werner, Dipl.-Ing. et al, Staufenstrasse 36, II P.O. Box 174109, D-6000 Frankfurt/Main (DE)**

ACTORUM AG

## Beschreibung

Die Erfindung betrifft ein Verfahren zum Öffnen, axialen Raffen und Abtrennen von dünnwandigem strangförmigem Schlauchhüllenmaterial, insbesondere Kunstdarm für die Wurstherstellung, zu Schlauchraupen bestimmter Länge und zum anschliessenden Überführen derselben entgegen der Raffrichtung an eine Weiterverarbeitungsstelle wie insbesondere das Füllrohr einer Wurstfüllmaschine, wobei das Raffen durch Vorschieben des geöffneten Schlauchhüllenmaterials gegen Anschlagmittel erfolgt, sowie eine Anordnung zur Durchführung eines solchen Verfahrens.

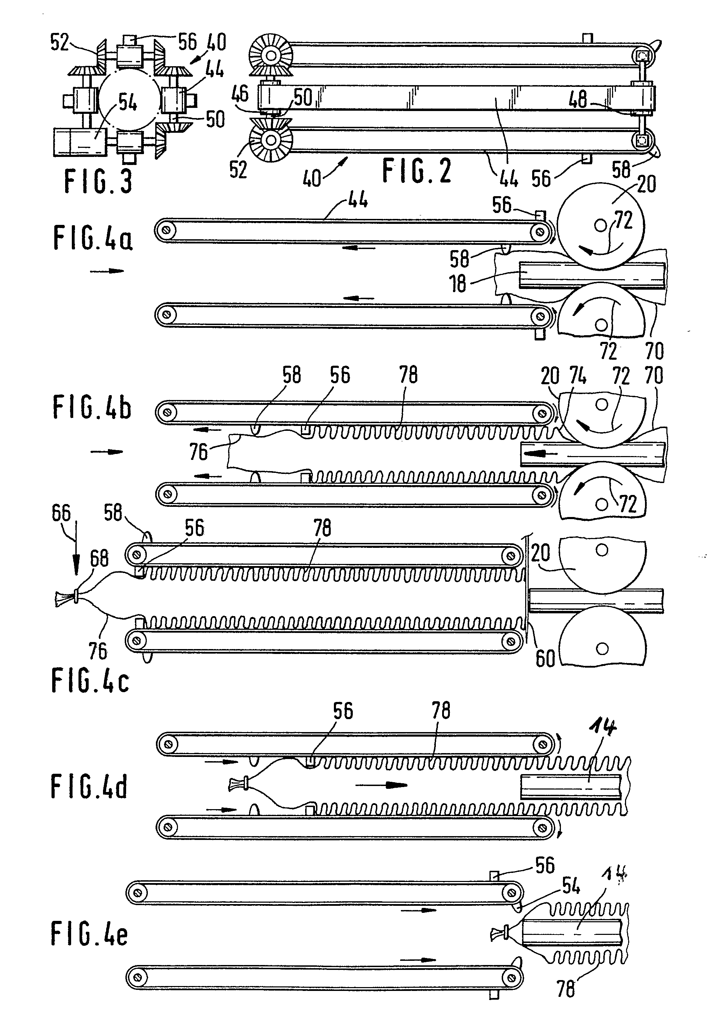

Ein derartiges Verfahren ist aus der DE-A Nr. 2941872 bekannt und kommt dort bei der automatischen Beschickung des Füllrohrs einer Wurstfüll- und -verschliessmaschine mit zu Raupen gerafften Abschnitten von füllfertigem Schlauchhüllenmaterial zur Anwendung. Dabei erfolgt das Raffen bei einem Ausführungsbeispiel (Fig. 3) auf jeweils einem von mehreren an einem Revolver angeordneten Raffrohren, von denen die fertige Schlauchraupe nach dem Abtrennen vom Schlauchhüllenstrang und der Weiterschaltung des Revolvers auf das Füllrohr der Füllmaschine mit einem fluidbetätigten Abstreiforgan überführt wird. Bei einem anderen Ausführungsbeispiel wird in einer aus zwei Schalen gebildeten hohlen Aufnahmeeinrichtung gerafft, die nach dem Abtrennen vor das Füllrohr verschwenkt und mit der Schlauchraupe auf das Füllrohr aufgeschoben wird, wonach die Schalen öffnen und eine Leerbewegung in die Ausgangsstellung gestatten. In beiden Fällen wird die Schlauchraupe erst am Ende des Raffrohrs bzw. der Schalenanordnung von festen Anschlägen abgefangen, während durch das Raffrohr bzw. die geschlossenen Halbschalen Luft unter erhöhtem Druck zum Aufblähen des Schlauchhüllenmaterials in dessen offenen Anfang eingeleitet wird.

Die Abstützung des Schlauchmaterials beim Raffen mit dem beim späteren Füllvorgang vorauseilenden Raupenende gegen die Anschlagmittel verursacht jedoch Schwierigkeiten und Zeitverluste beim Setzen der ersten Verschlusskammer am Anfang der zu füllenden Raupe. Bei dem Revolver kann dies erst später erfolgen, nachdem die Raupe auf das Füllrohr aufgeschoben ist, und es bedarf dabei einer Streckung des gerafften Materials im Verschliessbereich, um einen einwandfreien Sitz der Klammer zu gewährleisten. Bei der Schalenanordnung besteht zwar die Möglichkeit, die Klammer schon vor dem Verbringen vor das Füllrohr zu setzen. Jedoch sind auch hier besondere Mittel zum Erfassen und Herausziehen des Raupenanfangs durch eine Stirnöffnung der Aufnahmeeinrichtung zwischen den Anschlägen hindurch erforderlich.

Diese Schwierigkeiten treten zwar nicht auf, wenn alternativ zu dem eingangs genannten Verfahren unmittelbar auf ein Füllrohr gerafft wird, sei es ein Einzelfüllrohr oder eines von mehreren an einem Revolver, wie dies bei dem Ausführungsbeispiel nach Fig. 1 der DE-A Nr. 2941872 der Fall ist, da die fertige Schlauchraupe dort an dem später beim Füllen vorauseilenden Ende vom Schlauchhüllenstrang abgetrennt wird und das Setzen der Klammer mit dem Abtrennvorgang auf einfache Weise verbunden werden kann. Dafür bereitet in diesem Fall die Zufuhr der Blähluft Schwierigkeiten, da das noch Brätreste enthaltende Füllrohr hierzu nicht benutzt werden kann.

Beim klassischen Raffen von dünnwandigem Schlauchhüllenmaterial zu hochverdichteten Schlauchraupen, die als Zwischenprodukte erst später an anderer Stelle weiterverarbeitet werden, ist es auch allgemein bekannt, die für gewöhnlich am Einspannende eines fliegenden Raffrohrs angeordneten Anschlagmittel während des Raffvorgangs entsprechend der Längenzunahme der Schlauchraupe gesteuert zurückzubewegen. Die derart hergestellten Schlauchraupen werden jedoch in der Regel erst beim Verbraucher am Anfang verschlossen, nachdem sie auf das Füllrohr aufgeschoben und durch die auf die Füllrohrmündung aufgesetzte Darmbremse hindurchgezogen worden sind.

Es ist die Aufgabe der Erfindung, ein Verfahren der eingangs genannten Art dahingehend weiterzubilden, dass unter Aufrechterhaltung der Voraussetzungen für die einfache Zuführung von Blähluft eine dichte Raffung des Schlauchmaterials bei gleichzeitiger Bildung eines ungerafften Raupenanfangs ermöglicht wird, der dann auf einfache Weise das Setzen einer Verschlussklammer ermöglicht.

Erfindungsgemäss wird diese Aufgabe dadurch gelöst, dass die Anschlagmittel erst nach Beginn der Vorschubbewegung an einer mit Abstand hinter dem Schlauchanfang befindlichen Stelle des Schlauchmaterials zur Wirkung gebracht und dann in an sich bekannter Weise entsprechend der Längenzunahme der Schlauchraupe in Raffrichtung zurückbewegt werden und dass die abgetrennten Schlauchraupen der Weiterverarbeitungsstelle durch Umsteuerung der Bewegung der Anschlagmittel in entgegengesetzte Richtung zugeführt werden.

Durch das bewusste Wirksammachen der Anschlagmittel erst nach Beginn der Vorschubbewegung im Abstand hinter dem Schlauchanfang bleibt das Schlauchmaterial bis dahin ungerafft, während hinter den Anschlagmitteln von vornherein eine dichte Faltenlegung gewährleistet wird. Da die Anschlagmittel mit umgekehrter Bewegungsrichtung auch gleichzeitig zum Überführen der fertigen Raupe an die Weiterverarbeitungsstelle verwendet werden, bleibt der ungeraffte Abschnitt auch hierbei erhalten und gestattet ein einfaches Verschliessen des vorderen Raupenendes, wie es insbesondere bei der Weiterverarbeitung auf dem Füllrohr einer Wurstfüllmaschine benötigt wird.

In vorteilhafter Ausgestaltung des erfindungsgemässen Verfahrens kann die Bildung des ungerafften Anfangsabschnitts dadurch weiter begünstigt werden, dass das Schlauchhüllenmaterial zu Beginn der Vorschubbewegung an seinem Anfang erfasst und bis zum Wirksamwerden der Anschlagmittel mit der Vorschubbewegung entsprechender Geschwindigkeit in Vorschubrichtung gezogen wird. Es leuchtet ein, dass auf diesem Wege etwaige Stauchungen beim Vorschieben der Hülle in deren Anfangsbereich vermieden werden. Sobald dann die Anschlagmittel in Wirkungsstellung gebracht werden, wird die Zugbewegung mit der verminderten Geschwindigkeit, mit welcher die Länge der Raupe zunimmt, fortgesetzt.

Nach einem anderen Merkmal zur vorteilhaften Ausgestaltung des erfindungsgemässen Verfahrens wird das Schlauchhüllenmaterial nach dem Abtrennen vom Strang im ungerafften Anfangsbereich erschlossen, bevor die Schlauchraupe der Weiterverarbeitungsstelle zugeführt wird. Dadurch werden Totzeiten vor der Weiterverarbeitung der Schlauchraupen vermieden und zugleich beim Aufziehen der Schlauchraupen auf einen langgestreckten Träger wie beispielsweise das Füllrohr einer Wurstfüllmaschine an der Weiterverarbeitungsstelle eine natürliche Begrenzung geschaffen.

Zur praktischen Durchführung des erfindungsgemässen Verfahrens wird eine Anordnung mit einer ein Raffwerkzeug sowie ein schwimmendes Raffrohr enthaltenden Hüllenöffnungs- und -vorschubeinrichtung, einer an diese anschliessbaren und mit Anschlägen für das vorgeschobene Schlauchhüllenmaterial versehenen Aufnahmeeinrichtung, einer Trenneinrichtung zum Abtrennen der von der Aufnahmeeinrichtung aufgenommenen Schlauchraupe vom Schlauchhüllenstrang sowie Mitteln zum Verbringen der Aufnahmeeinrichtung mit der abgetrennten Schlauchraupe vor die Weiterverarbeitungsstelle verwendet, wobei erfindungsgemäss die Anschläge gesteuert radial und axial beweglich an der Aufnahmeeinrichtung angeordnet werden.

Eine erste vorteilhafte Ausgestaltung einer solchen Anordnung zeichnet sich dadurch aus, dass die Aufnahmeeinrichtung mindestens zwei die Schlauchraupen beim Raffen zwischen sich aufnehmende, synchron antreibbare Endlosförderbänder aufweist. Dabei können an den Endlosförderbändern mitlaufende Anschlagglieder angeordnet sein, welche an den Umlenkstellen der Förderbänder aus dem Innenbereich der Aufnahmeeinrichtung herausschwenkbar sind. Weiterhin können an den Endlosförderbändern mitlaufende Finger zum Erfassen des Schlauchanfangs angeordnet sein, und die Geschwindigkeit der Endlosförderbänder kann zwischen einem der Vorschubgeschwindigkeit des Schlauchmaterials entsprechenden Grösse und einer dem Längenzuwachs der gerafften Raupe entsprechenden Grösse umschaltbar sein.

Eine andere vorteilhafte Ausgestaltung der erfindungsgemässen Anordnung besteht darin, dass die Aufnahmeeinrichtung einen zentralen Dorn zur Aufnahme des gerafften Schlauchhüllenmaterials aufweist. Dabei ist der Dorn zweckmässig als langgestrecktes Rohr mit wenigstens zwei am Umfang verteilten Längsschlitzen ausgebildet, und in dem Rohr sind längsverschiebliche Elemente zur Lagerung und Steuerung von durch die Längsschlitze radial nach auswärts bewegbaren und entlang der Längsschlitze verschiebbaren Anschlaggliedern enthalten, die vorteilhaft von durch die Längsschlitze heraus schwenkbaren Anschlaghebeln gebildet sein können. Ein solcher Dorn lässt sich auch in Verbindung mit den vorerwähnten Förderbändern verwenden und erleichtert das Überführen der darauf gebildeten Schlauchraupen insbesondere dann, wenn an der Stelle der Weiterverarbeitung ein dem Dorn im Durchmesser entsprechendes oder kleineres langgestrecktes Glied wie insbesondere das Füllrohr einer Wurstfüllmaschine vorhanden ist.

Noch eine weitere Ausgestaltung der erfindungsgemässen Anordnung sieht vor, dass die Aufnahmeeinrichtung eine Anzahl rings um die aufzunehmende Schlauchraupe verteilter langgestreckter Führungsglieder aufweist, auf denen längsverschieblich Elemente zur Lagerung und Steuerung von zwischen den Führungsgliedern radial nach einwärts bewegbaren und entlang der Führungsglieder verschiebbaren Anschlaggliedern angeordnet sind. Auch in diesem Fall können die Anschlagglieder zweckmässig von zwischen den langgestreckten Führungsgliedern in das Innere der Aufnahmeeinrichtung verschwenkbaren Anschlaghebeln gebildet sein. Die Anschlagglieder können in einer alternativen Ausgestaltung aber auch von den freien Enden der Kolbenstangen von Fluidzylindern gebildet sein, die an den Aussenseiten der Führungsglieder längsverschieblich angeordnet sind.

Für alle vorgenannten Anordnungen ergibt sich ferner dadurch eine vorteilhafte Weiterbildung, dass die Aufnahmeeinrichtung gesteuert axial verschieblich angeordnet und in einer von der Hüllenöffnungs- und -vorschubeinrichtung zurückgezogenen Stellung zur Verbindung an die Weiterverarbeitungsstelle seitlich wegbewegbar ist.

Die Erfindung wird nachstehend anhand einiger in der Zeichnung dargestellter Ausführungsbeispiele von Anordnungen und Einrichtungen zur Durchführung des erfindungsgemässen Verfahrens näher erläutert. Es zeigen:

Fig. 1: in perspektivischer und stark schematisierter Darstellung eine erste Anordnung zur Durchführung des erfindungsgemässen Verfahrens mit einer von Endlosförderbändern gebildeten Aufnahmeeinrichtung für die von einer Hüllenöffnungs- und -vorschubeinrichtung zum Füllrohr einer Wurstfüllmaschine zu überführenden Schlauchraupen,

Fig. 2: eine Seitenansicht der Aufnahmeeinrichtung nach Fig. 1,

Fig. 3: eine Stirnansicht der Aufnahmeeinrichtung nach Fig. 1,

Fig. 4a-e: einen Längsschnitt durch die Aufnahmeeinrichtung nach den Fig. 1-3 sowie Teile der Hüllenöffnungs- und -vorschubeinrichtung bzw. das Füllrohr in verschiedenen Phasen eines Arbeitszyklus,

Fig. 5: einen stark schematisierten Längsschnitt durch eine abgeänderte Ausführungsform der Aufnahmeeinrichtung nach den Fig. 1-3, bei welcher die Endlosförderbänder zwischen ihren Umlenkstellen federnd abgestützt sind,

Fig. 6: in schematischer Darstellung die Seitenansicht der zu einer Vorrichtung zusammengefassten Anordnung einer Hüllenöffnungs- und -vorschubeinrichtung und einer auf einem Querschlitten verfahrbaren Aufnahmeeinrichtung für die gerafften Raupen mit Endlosförderbändern und einem zentralen Raffrohr,

Fig. 7a-d: ausschnittsweise Teildarstellungen von Fig. 6 in anderen Phasen der Vorrichtung,

Fig. 8a-d: weitere ausschnittsweise Teildarstellungen der Aufnahmeeinrichtung in verschiedenen Phasen beim Überführen einer gerafften Raupe auf das Füllrohr einer Wurstfüllmaschine,

Fig. 9: einen Längsschnitt durch eine von einem Rohrdorn gebildete Aufnahmeeinrichtung mit von innen heraus durch Längsschlitze in Wirkungsstellung verschwenkbaren Anschlaghebeln,

Fig. 10: einen Längsschnitt durch eine von einer geschlitzten Hülse gebildete Aufnahmeeinrichtung mit durch die Schlitze nach einwärts verschwenkbaren Anschlaghebeln, und

Fig. 11: eine ähnliche Aufnahmeeinrichtung wie in Fig. 10, bei welcher die Anschlagglieder von den Kolbenstangen von Fluidzylindern gebildet sind.

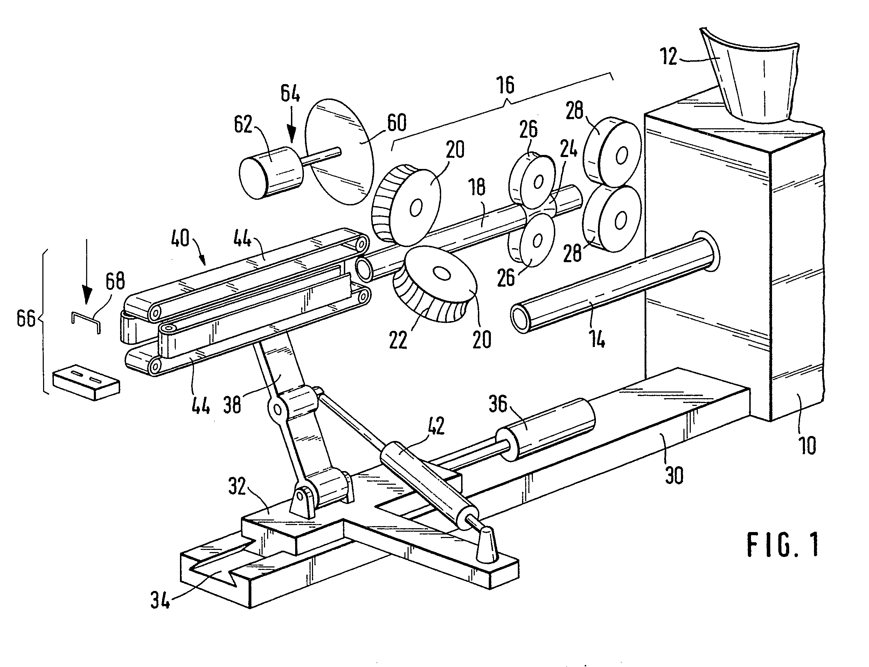

Bei der Anordnung nach Fig. 1 ist mit 10 eine Wurstfüllmaschine bezeichnet, die einen Fülltrichter 12 und ein Füllrohr 14 hat. Durch das Füllrohr 14 wird in bekannter Weise innerhalb der Füllmaschine aufbereitetes Wurstbrät in eine Schlauchhülle eingefüllt, die zuvor auf das Füllrohr 4 aufgezogen worden ist und durch eine (nicht gezeigte) Darmbremse, welche die Füllrohrmündung elastisch übergreift, gegenüber dem Fülldruck des Bräts nachgiebig zurückgehalten wird. Vor dem Füllrohr befindet sich ferner eine (ebenfalls nicht gezeigte) Verschliesseinrichtung zum Setzen von Verschlussklammern, die zusammen mit der Darmbremse beim Aufziehen einer neuen Schlauchhülle entfernt, beispielsweise zur Seite weggeschwenkt wird.

Neben dem Füllrohr 14 befindet sich eine in ihrer Gesamtheit mit 16 bezeichnete Hüllenöffnungs- und -vorschubeinrichtung, die mit ihren wichtigsten Einzelteilen nur schematisch dargestellt ist. Die Hüllenöffnungs- und -vorschubeinrichtung 16 besteht in der Hauptsache aus einem schwimmenden Raffrohr 18 und einem Raffwerkzeug 20, das im Beispielsfall von drei um das Raffrohr 18 verteilten und synchron antreibbaren Raffrädern gebildet ist, welche zweckmässig an ihrem Umfang mit Zähnen oder Profilierungen 22 versehen sind.

Das Raffrohr 18 ist mit einer im Längsschnitt kreisbogenförmigen Einschnürung 24 versehen, in welche zwei Führungsrollen 26 eingreifen, die das Raffrohr 18 zentrieren und zugleich gegen Axialverschiebung festhalten. Die Führungsrollen 26 erfassen das Raffrohr 18 durch das (in Fig. 1 nicht gezeigte) Schlauchhüllenmaterial hindruch, welches von einer (nicht gezeigten) Vorratsrolle flach zwischen zwei Quetschwalzen 28 hindurch zugeführt wird, hinter denen das Schlauchhüllenmaterial mit Hilfe des Raffrohrs 18 auf seinen runden Querschnitt geöffnet wird.

Das, in Raffrichtung betrachtet, hintere Ende des Raffrohrs 18 liegt etwa in derselben Querebene und auf gleicher Höhe wie die Mündung des Füllrohrs 14. Auf einer darunter befindlichen langgestreckten Grundplatte 30 ist ein Lagerbock 32 in einer Führung 34 mit Hilfe eines Kraftzylinders 36 längsverschiebbar angeordnet. Der Lagerbock 32 lagert einen Traghebel 38, von dem eine in ihrer Gesamtheit mit 40 bezeichnete Aufnahmeeinrichtung getragen ist, die mittels eines Kraftzylinders 42 zwischen einer mit dem Raffrohr 18 fluchtenden Stellung und einer mit dem Füllrohr 14 fluchtenden Stellung hin- und herverschwenkt werden kann.

Wie insbesondere aus den Fig. 2 und 3 ersichtlich, weist die Aufnahmeeinrichtung 40 vier um die Längsachse verteilte langgestreckte Endlosförderbänder 44 auf, die an einem (nicht gezeigten) Gestell um Endrollen 46, 48 geführt sind. Die Endrollen 46 sitzen auf Wellen 50, die über Kegelradpaare 52 antriebsmässig miteinander gekuppelt und durch einen umsteuerbaren Antriebsmotor 54 mit zwei Drehzahlen synchron antreibbar sind. Die Endrollen 48 können demgegenüber frei drehbar gelagert sein.

Jedes Endlosförderband 44 trägt an seiner Aussenseite einen Anschlag 56 und vor diesem mit Abstand einen Mitnehmerfinger 58, die bei der Drehung der Endlosförderbänder in Raffrichtung zunächst um die Umlenkrollen 48 nacheinander nach einwärts verschwenkt und dann durch das Innere der Aufnahmeeinrichtung 40 axial hindurchbewegt werden. Alle Anschläge 56 ebenso wie alle Mitnahmefinger 58 liegen dabei in je einer gemeinsamen Querebene zur Längserstreckung der Aufnahmerichtung 40.

In Fig. 1 ist weiterhin mit 60 ein Schneidwerkzeug in Gestalt einer Trennscheibe bezeichnet, die von einem Elektromotor 62 antreibbar und von einem (nicht gezeigten) Kraftzylinder in Richtung des Pfeils 64 zwischen dem Füllrohr 18 und der Aufnahmeeinrichtung 40 hindurchbewegt werden kann.

Mit 66 ist schliesslich schematisch eine hinter der Aufnahmeeinrichtung 40 in Verlängerung des Raffrohrs 18 angeordnete Verschliesseinrichtung zum Setzen von Verschlussklammern 68 auf das aus der Aufnahmeeinrichtung 40 herausragende Ende einer Schlauchraupe bezeichnet, wie dies an späterer Stelle noch näher erläutert wird.

Die Wirkungsweise der beschriebenen Anordnung ist folgende:

Es sei angenommen, dass die Aufnahmeeinrichtung 40 mit Hilfe des Kraftzylinders 42 vor die Hüllenöffnungs- und -vorschubeinrichtung verschwenkt und mittels des Kraftzylinders 36 in eine das Ende des Raffrohrs 18 übergreifende Stellung gebracht ist (Fig. 4a). Weiterhin sei angenommen, dass der Hüllenöffnungs- und -vorschubeinrichtung 16 strangförmiges Schlauchhüllenmaterial 70 nach Passieren der Quetschwalzen 28 und Öffnung durch das Raffrohr 18 unter den Raffrädern 20 hindurch in die Vorrichtung eingeführt ist und mit seinem vorderen Ende etwa bündig mit dem vorderen Ende des Raffrohrs 18 abschliesst.

In dieser Ausgangsstellung werden die Raffräder 20 in Richtung der Pfeile 72 (Fig. 4a) eingeschaltet und schieben das Schlauchhüllenmaterial 20 nach vorn in die Aufnahmeeinrichtung 40 hinein. Gleichzeitig wird der Antriebsmotor 54 für die Endlosförderbänder 44 mit der höheren der beiden Drehzahlen eingeschaltet und bewirkt durch den Antrieb der Förderbänder, dass die Mitnehmerfinger 58 das vordere Ende der Schlauchhülle erfassen und längs der Aufnahmeeinrichtung 40 mitnehmen.

Mit dem weiteren Umlauf der Endlosförderbänder 44 gelangen auch die Anschläge 56 in den Bereich der Umlenkrollen 58 und werden nach einwärts in das Innere der Aufnahmeeinrichtung verschwenkt, wo sie ihrerseits das Schlauchhüllenmaterial 70 erfassen. Sobald dies geschehen ist, wird der Antriebsmotor 54 für die Endlosförderbänder 44 auf seine niedrigere Drehzahl umgeschaltet mit der Folge, dass nun die Anschläge 56 und ebenso die Mitnehmerfinger 58 wesentlich langsamer durch die Aufnahmeeinrichtung 40 wandern, als das Schlauchhüllenmaterial 70 von den Raffrädern 20 vorgeschoben wird. Dadurch wird das Schlauchhüllenmaterial 70 noch im Bereich des Raffrohrs 18 in Falten 74 gelegt und gerafft, während der Anfangsabschnitt 76 des Schlauchhüllenmaterials von den Mitnehmerfingern 58 weiterhin ungerafft durch die Aufnahmeeinrichtung 40 hindurchgezogen wird (Fig. 4b).

Schliesslich erreichen die Mitnehmerfinger 58 die Endrollen 46 der Endlosförderbänder 44 und werden aus dem Inneren der Aufnahmeeinrichtung 40 herausgeschwenkt, während die Anschläge 56 ihre Bewegung innerhalb der Aufnahmeeinrichtung bis zu den Endrollen 46 fortsetzen. Dadurch wird das ungeraffte vordere Ende 76 des Schlauchhüllenmaterials aus der Aufnahmeeinrichtung 40 heraus in den Bereich der Verschliesseinrichtung 66 geschoben, während die Aufnahmeeinrichtung 40 auf ihrer gesamten Länge eine von dem gerafften Schlauchhüllenmaterial gebildete Schlauchraupe 78 enthält. In diesem Zustand werden sowohl die Raffräder 20 als auch die Endlosförderbänder 44 stillgesetzt und die Aufnahmeeinrichtung 40 mit Hilfe des Kraftzylinders 36 vom Raffrohr 18 wegbewegt. In dieser Stellung setzt die Verschliesseinrichtung 66 auf das ungeraffte Ende 76 des Schlauchhüllenmaterials eine Verschlussklammer 68, und der Motor 62 der Abtrenneinrichtung wird eingeschaltet und mit der Trennscheibe 60 durch den geschaffenen Zwischenraum zwischen dem Raffrohr 18 und der Aufnahmeeinrichtung 40 zur Durchtrennung des Schlauchmaterials 70 hindurchbewegt (Fig. 4c).

Nun wird die Aufnahmeeinrichtung mit Hilfe des Kraftzylinders 42 vor das Füllrohr 14 verschwenkt und vom Kraftzylinder 36, von dem die dortige Verschliesseinrichtung mit der Darmbremse entfernt worden ist, ein Stück aufgeschoben (Fig. 4d). Durch Einschaltung des Antriebsmotors 54 in umgekehrter Drehrichtung wird, wie Fig. 4d weiter zeigt, die Schlauchraupe 78 von den Anschlägen 54 auf das Füllrohr 14 aufgeschoben, und am Ende werden zunächst die Anschläge 56 und daraufhin die Mitnehmerfinger 58 um die Endrollen 48 wieder aus dem Inneren der Aufnahmeeinrichtung 40 herausgeschwenkt (Fig. 4e).

Durch erneutes Betätigen der Kraftzylinder 36 und 42 kann hierauf die Aufnahmeeinrichtung in die Ausgangslage gemäss Fig. 4a zurückgebracht werden.

Die Endlosförderbänder 44 können an ihren Aussenseiten gezahnt oder geriffelt oder auf sonstige Weise profiliert sein (nicht dargestellt). Dadurch werden die Falten der Schlauchraupe besser erfasst und es wird insbesondere bei der Trennung der Aufnahmeeinrichtung 40 vom Raffrohr 18 mit Hilfe des Kraftzylinders 36 vermieden, dass ein Teil der Schlauchraupe wieder aus der Aufnahmeeinrichtung 40 herausgezogen wird.

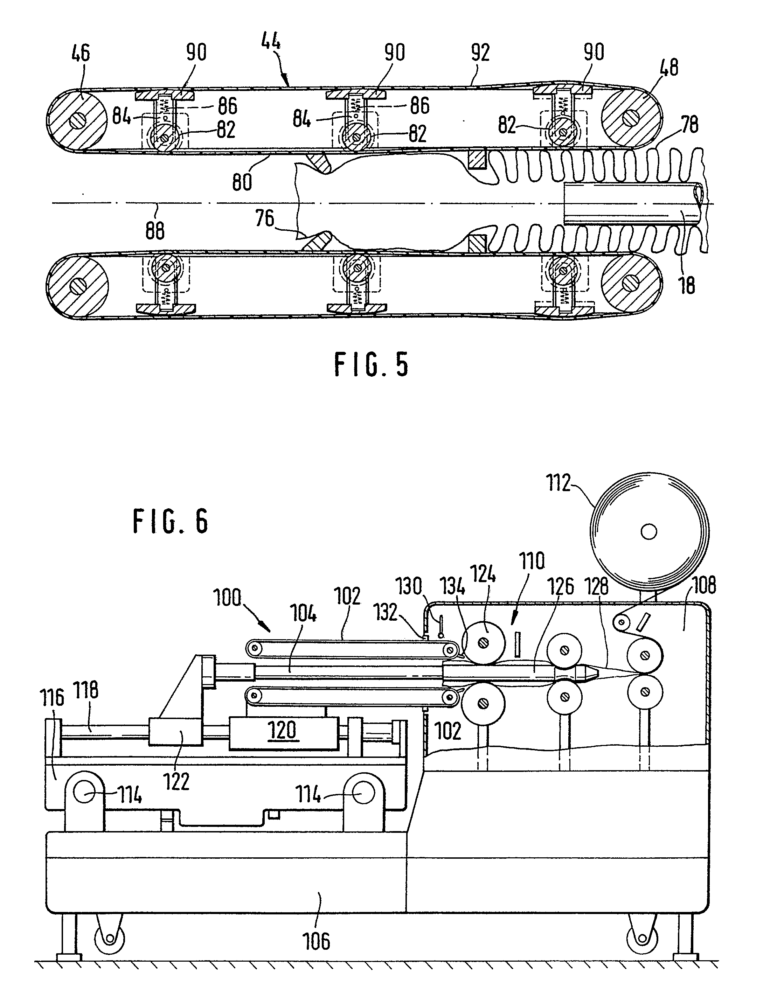

Bei der in Fig. 5 gezeigten abgeänderten Ausführungsform der Aufnahmeeinrichtung 40 sind die inneren Trume 80 der Endlosförderbänder 44 zwischen den Endrollen 46, 48 durch Rollen 82 abgestützt, die an Schiebern 84 gelagert sind, welche von Federn 86 in Radialrichtung zur Mittellängsachse 88 der Aufnahmeeinrichtug 44 vorbelastet sind. Die Schieber 84 tragen ferner an den radial äusseren Enden Schuhe 90, die sich gegen die äusseren Trume 92 der Endlosförderbänder 44 abstützen und dadurch den Abstand zwischen den Endlosförderbändern gleichhalten. Durch diese Ausbildung wird eine zusätzliche radiale Haltekraft auf die von der Aufnahmeeinrichtung 40 aufgenommene Schlauchraupe 78 ausgeübt, und es lassen sich auch unterschiedlich grosse Schlauchhüllendurchmesser sicher erfassen.

Fig. 6 zeigt eine Vorrichtung mit einer anderen Anordnung und Ausbildung der Aufnahmeeinrichtung, die dort in ihrer Gesamtheit mit 100 bezeichnet ist und zusätzlich zu auch dort verwendeten Endlosförderbändern 102 einen zentralen Dorn in Gestalt eines langgestreckten Rohres 104 aufweist, der sich mittig zwischen den Förderbändern 102 hindurch erstreckt.

Die Vorrichtung hat ein Maschinenbett 106 mit einem Ständerteil 108, an welchem die Hüllenöffnungs- und -vorschubeinrichtung 110 sowie eine Vorratsrolle 112 für das zu verarbeitende Schlauchhüllenmaterial angeordnet sind.

Neben dem Ständer 108 trägt das Maschinenbett 106 auf Führungsstangen 114 einen Querschlitten 116, der seinerseits längsgerichtete Führungsstangen 118 trägt. Auf den Führungsstangen 118 ist ein erster Schlitten 120 verschieblich gelagert, der die Endlosbänder 102 mit ihren Führungs- und Antriebseinrichtungen (nicht gezeigt) trägt.

Auf den Führungsstangen 118 ist ferner ein zweiter Schlitten 122 verschiebbar, an dem das den Dorn bildende langgestreckte Rohr 104 fliegend befestigt ist. Beide Schlitten 120, 122 ebenso wie der Querschlitten 116 sind mit (nicht gezeigten) Antrieben vorzugsweise in Gestalt von Kraftzylindern versehen.

Die Hüllenöffnungs- und -vorschubeinrichtung 110 ist genauso ausgebildet wie die Einrichtung 16 nach Fig. 1 und enthält wenigstens zwei Raffräder 124 sowie ein sich zwischen diesen erstreckendes Raffrohr 126, über welches ein strangförmiges Schlauchhüllenmaterial 128 den Raffrädern 124 zugeführt wird. Ferner ist eine Trenneinrichtung 130 vorgesehen, die hier als im aufgeheizten Zustand durch das Hüllenmaterial hindurchbewegbarer Glühdraht angedeutet ist.

Die Förderbänder 102 tragen wie bei dem zuvor beschriebenen Ausführungsbeispiel Anschläge 132 und Mitnehmerfinger 134, die in der in Fig. 6 gezeigten Ausgangsstellung zunächst noch aus dem Inneren der Aufnahmeeinrichtung herausgeschwenkt sind.

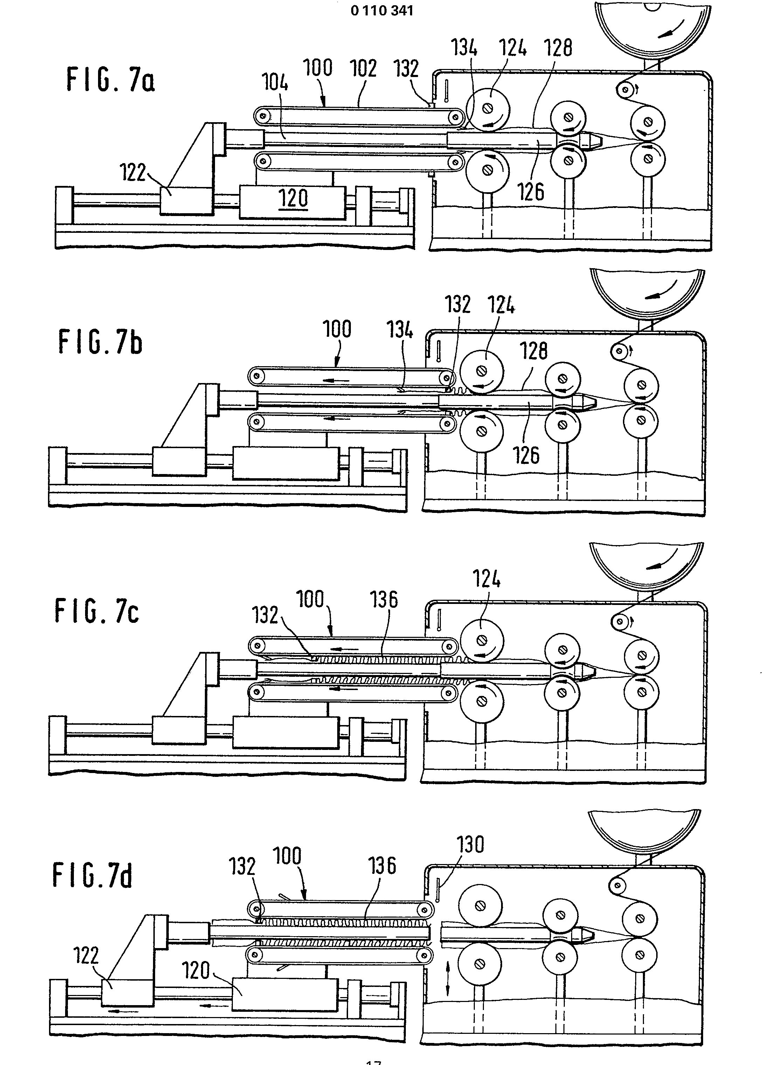

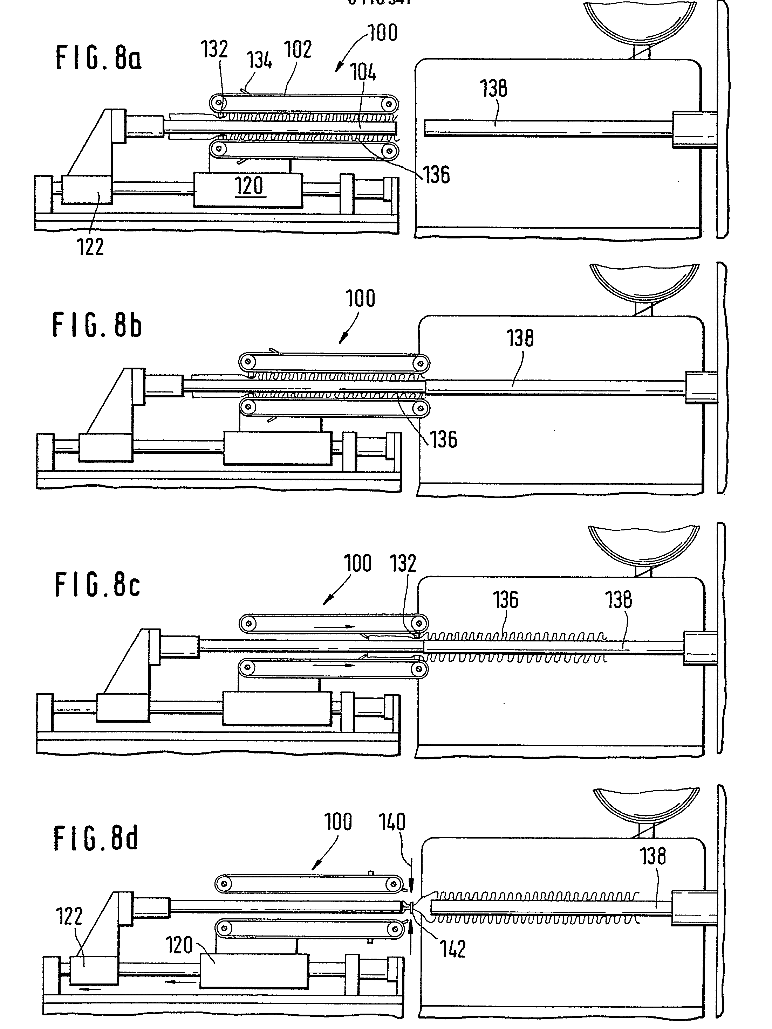

Die Wirkungsweise der Vorrichtung nach Fig. 6 ist ähnlich der nach Fig. 1 und geht im weiteren aus den Fig. 7a-d und 8a-d hervor:

Nachdem die Förderbänder 102 und das Rohr 104 mit dem Schlitten 116 vor die Hüllenöffnungs- und -vorschubeinrichtung 110 gebracht sind und die Schlitten 120, 122 dergestalt gegen das Raffrohr 116 vorgeschoben worden sind, dass das Rohr 104 gegen das Raffrohr 126 anliegt und die Förderbänder 102 das Ende des Raffrohrs 126 übergreifen (Fig. 6), werden die Raffräder 124 und ebenso die Förderbänder 102 in Richtung der Pfeile in Fig. 7a eingeschaltet, wobei die Endlosförderbänder 102 zunächst wieder mit der grösseren Geschwindigkeit betrieben werden. Die Mitnehmerfinger 134 erfassen das von den Raffrädern 124 vorgeschobene vordere Ende des Schlauchhüllenmaterials 128 und nehmen dieses auf ihrem Weg durch die Aufnahmeeinrichtung mit.

Sobald auch die Anschläge 132 das Schlauchhüllenmaterial erfassen, werden die Förderbänder 102 auf geringere Geschwindigkeiten geschaltet (Fig. 7b), und das Schlauchmaterial wird zu einer zunehmend längeren Raupe 136 gerafft (Fig. 7c).

Wenn die Raupe die volle Länge der Aufnahmevorrichtung erreicht hat (Fig. 7d), werden die Antriebe der Raffräder 124 und der Endlosförderbänder 102 abgeschaltet, und die Schlitten 120, 122 werden vom Raffrohr 126 zur Bildung eines Zwischenraumes zwischen dem Raffrohr 126 und der Aufnahmeeinrichtung verfahren, durch welchen die Trenneinrichtung 130 zur Abtrennung der gerafften Raupe vom Schlauchhüllenstrang hindurchgeführt wird.

Nun wird der Querschlitten 116 mit der Aufnahmeeinrichtung und der darin enthaltenen Schlauchraupe in Stellung vor das Füllrohr 138 der Füllmaschine verbracht (Fig. 8a), und die Schlitten 120, 122 werden erneut so weit vorgefahren, bis die Endlosförderbänder 102 das vordere Ende des Füllrohrs 138 übergreifen und das Rohr 104 unmittelbar an das Füllrohr 138 anschliesst (Fig. 8b). Daraufhin wird der Antrieb der Endlosförderbänder 102 in umgekehrter Richtung eingeschaltet, wodurch die Anschläge 132 die Raupe auf das Füllrohr 138 aufschieben (Fig. 8c).

Wenn die gesamte Raupe auf das Füllrohr 138 aufgeschoben ist, werden die Schlitten 120, 122 wieder zurückgefahren und mit Hilfe der durch Pfeile 140 angedeuteten Verschliesseinrichtung der Füllmaschine eine Verschlussklammer 142 gesetzt.

Daraufhin fährt die Aufnahmeeinrichtung mit Hilfe der Schlitten 116, 120, 122 in die Stellung nach Fig. 6 zurück, während die Füllmaschine eingeschaltet wird und das Füllen des mit der aufgezogenen Schlauchraupe bereitgestellten Schlauchhüllenmaterials beginnt.

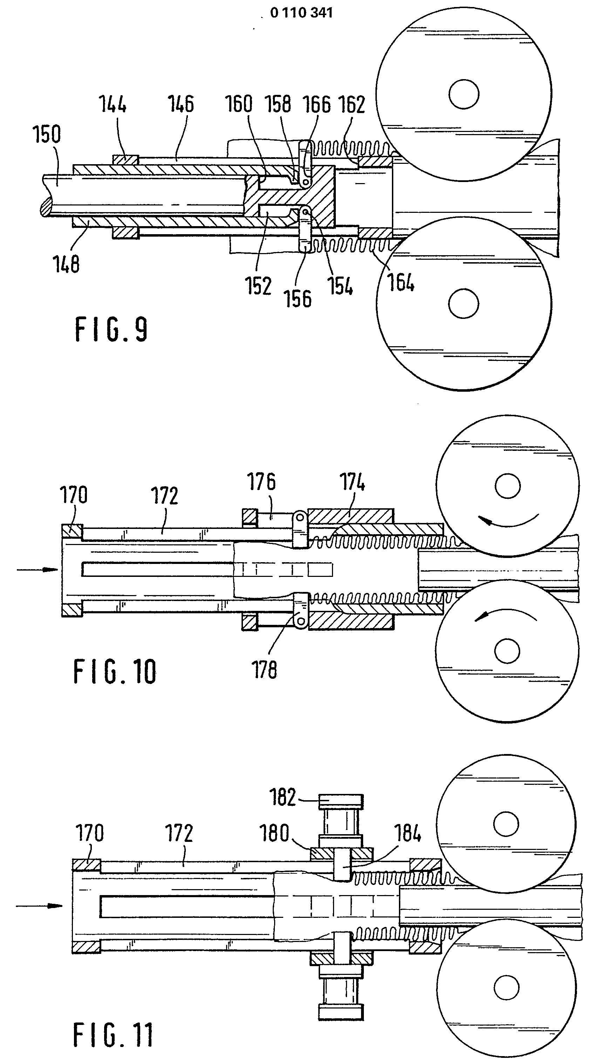

Fig. 9 zeigt einen rohrförmigen Dorn 144, der für sich allein oder in Verbindung mit Endlosförderbändern wie in Fig. 6 die Aufnahmeeinrichtung bilden kann. Der Rohrdorn 144 ist mit mehreren am Umfang verteilten Längsschlitzen 146 versehen und enthält ein darin verschiebliches Innenrohr 148 sowie eine in diesem verschiebliche zentrale Schubstange 150. Die zentrale Schubstange ist mit Ausnehmungen 152 versehen, die in den Längsschlitzen 146 gegenüberliegen und von Achsen 154 durchsetzt sind, an denen Anschlaghebel 156 gelagert sind. Das Innenrohr 144 ist an seinem Ende mit radial nach einwärts weisenden Anschlägen 158 versehen, welche die Bewegung zwischen dem Innenrohr 148 und der Schubstange begrenzen.

Wenn die Schubstange 150 aus der in Fig. 9 gezeigten Stellung nach rechts verschoben wird, bleibt das Innenrohr 148 zunächst stehen, bis die Anschläge 158 von den Endkanten 160 der Ausnehmungen 152 erfasst werden. Bei der weiteren Verschiebung der Schubstange 150 nach rechts stossen die Anschlaghebel 156 gegen die Endkanten 162 der Längsschlitze 146 im Rohrdorn 144 und werden nach einwärts geklappt, bis ihre Enden gegen das Ende des Innenrohrs 148 anliegen. In dieser Stellung sind die Anschlaghebel 156 vollständig innerhalb des Rohrdorns 144 versenkt.

Um die Anschlaghebel 156 aufzurichten und damit in Wirkungsstellung gegenüber dem zu raffenden Schlauchmaterial 164 zu bringen, wird die Schubstange 150 zunächst ohne das Innenrohr 148 nach links bewegt, wobei die Endkante des Innenrohrs 148 die Anschlaghebel 156 aufrichtet und in Anlage gegen Schulterflächen 166 am Ende der Ausnehmungen 152 der Schubstange bringt. Auf diese Weise können also die Anschlaghebel 156 in und ausser Wirkungsstellung zu dem Hüllenmaterial verschwenkt werden. Anschlagfinger zum Erfassen des ungerafften Anfangs des Schlauchhüllenmaterials sind hier jedoch nicht vorhanden und können im Bedarfsfall wie bei den vorhergehenden Ausführungsbeispielen an entsprechenden Endlosförderbändern angebracht werden.

Bei der Ausführungsform nach Fig. 10 sind die Endlosförderbänder durch eine Hülse 170 ersetzt, die ähnlich dem Rohrdorn 144 der Fig. 9 mit am Umfang verteilten Längsschlitzen 172 versehen ist. Auf der Hülse 170 gleitet eine wesentlich kürzere Aussenhülse 174 mit entsprechend angeordneten Schlitzen 176, in denen Anschlageben 178 von einer in den Längsschlitzen 172 vollständig aufgenommenen Stellung in die dargestellte Wirkungsstellung verschwenkbar sind, in welcher die Anschlaghebel 178 radial nach einwärts gerichtet sind. Zur Betätigung der Anschlaghebel 178 kön-

nen ähnliche Mittel (nicht dargestellt) wie bei dem Rohrdorn nach Fig. 9 verwendet werden.

Fig. 11 zeigt eine abgeänderte Ausführungsform der Aufnahmeeinrichtung nach Fig. 10, bei welcher die dortige Aussenhülse durch einen Hülsenring 180 ersetzt ist, der an seiner Aussenseite mehrere am Umfang verteilte hydraulische oder pneumatische Kraftzylinder 182 trägt, deren Kolbenstangen 184 durch entsprechende Bohrungen im Hülsenring 180 hindurch in die Längsschlitze 172 eingreifen und bei Betätigung der Kraftzylinder in das Innere der Hülse 170 in Wirkungsstellung vorgeschoben werden.

Es versteht sich von selbst, dass bei beiden Ausführungsformen nach Fig. 10 und 11 entsprechende Antriebsmittel vorhanden sind, mit denen die Aussenhülse 174 bzw. die Ringhülse 180 entsprechend dem Längenzuwachs der gebildeten Raupe beim Raffen in der einen und später beim Überführen der gerafften Raupe auf das Füllrohr in der anderen Richtung verschoben werden.

Wie teilweise in den Ausführungsbeispielen durch Pfeile mit der Bezeichnung „Luft" angedeutet, kann in allen Fällen Blähluft in das zu rafende Schlauchmaterial eingeblasen werden. Bei dem Ausführungsbeispiel nach Fig. 9 muss hierzu noch eine zentrale Bohrung in der Schubstange vorgesehen werden.

## Patentansprüche

1. Verfahren zum Öffnen, axialen Raffen und Abtrennen von dünnwandigem strangförmigem Schlauchhüllenmaterial, insbesondere Kunstdarm für die Wurstherstellung, zu Schlauchraupen bestimmter Länge und zum anschliessenden Überführen derselben entgegen der Raffrichtung an eine Weiterverarbeitungsstelle wie insbesondere das Füllrohr einer Wurstfüllmaschine, wobei das Raffen durch Vorschieben des geöffneten Schlauchhüllenmaterials gegen Anschlagmittel erfolgt, dadurch gekennzeichnet, dass die Anschlagmittel erst nach Beginn der Vorschubbewegung an einer mit Abstand hinter dem Schlauchanfang befindlichen Stelle des Schlauchmaterials zur Wirkung gebracht und dann in an sich bekannter Weise entsprechend der Längenzunahme der Schlauchraupe in Raffrichtung zurückbewegt werden und dass die abgetrennten Schlauchraupen der Weiterverarbeitungsstelle durch Umsteuerung der Bewegung der Anschlagmittel in entgegengesetzte Richtung zugeführt werden.

2. Verfahren nach Anspruch 1, dadurch gekennzeichnet, dass das Schlauchhüllenmaterial zu Beginn der Vorschubbewegung an einem Anfang erfasst und bis zum Wirksamwerden der Anschlagmittel mit der Vorschubbewegung entsprechender Geschwindigkeit in Vorschubrichtung gezogen wird.

3. Verfahren nach Anspruch 1 oder 2, dadurch gekennzeichnet, dass das Schlauchhüllenmaterial nach dem Abtrennen vom Strang im ungerafften Anfangsbereich verschlossen wird, bevor die Schlauchraupe der Weiterverarbeitungsstelle zugeführt wird.

4. Anordnung zur Durchführung des Verfahrens nach einem der Ansprüche 1 bis 3, mit einer ein Raffwerkzeug (20) sowie ein schwimmendes Raffrohr (18) enthaltenden Hüllenöffnungs- und -vorschubeinrichtung (16; 110), einer an diese anschliessbaren und mit Anschlägen (56; 132; 156; 178; 184) für das vorgeschobene Schlauchhüllenmaterial (70; 128; 164) versehenen Aufnahmeeinrichtung (40; 100; 144; 170), einer Trenneinrichtung (60; 130) zum Abtrennen der von der Aufnahmeeinrichtung aufgenommenen Schlauchraupe (78; 136) vom Schlauchhüllenstrang sowie Mitteln (38; 42) zum Verbringen der Aufnahmeeinrichtung mit der abgetrennten Schlauchraupe vor die Weiterverarbeitungsstelle (14, 138), dadurch gekennzeichnet, dass die Anschläge (56, 132, 156, 178, 184) gesteuert radial und axial beweglich an der Aufnahmeeinrichtung (40, 100, 144, 170) angeordnet sind.

5. Anordnung nach Anspruch 4, dadurch gekennzeichnet, dass die Aufnahmeeinrichtung (40, 100) mindestens zwei die Schlauchraupen (78, 136) beim Raffen zwischen sich aufnehmende, synchron antreibbare Endlosförderbänder (44, 102) aufweist.

6. Anordnung nach Anspruch 5, dadurch gekennzeichnet, dass an den Endlosförderbändern (44, 102) mitlaufende Anschlagglieder (56, 132) angeordnet sind, welche an den Umlenkstellen (48) der Förderbänder aus dem Innenbereich der Aufnahmeeinrichtung (40, 100) herausschwenkbar sind.

7. Anordnung nach Anspruch 5 oder 6, dadurch gekennzeichnet, dass an den Endlosförderbändern (44, 102) mitlaufende Finger (58, 134) zum Erfassen des Schlauchanfangs (76) angeordnet sind und dass die Geschwindigkeit der Endlosförderbänder (44, 102) zwischen einer der Vorschubgeschwindigkeit des Schlauchhüllenmaterials (70, 128) entsprechenden Grösse und einer dem Längenzuwachs der gerafften Raupe (78, 136) entsprechenden Grösse umschaltbar ist.

8. Anordnung nach einem der Ansprüche 5 bis 7, dadurch gekennzeichnet, dass die Endlosförderbänder (44, 102) auf ihren Aussenseiten gezahnt oder geriffelt oder auf sonstige Weise profiliert sind.

9. Anordnung nach einem der Ansprüche 5 bis 8, dadurch gekennzeichnet, dass die Endlosförderbänder (44) in bezug auf die Mittellängsachse (88) der Aufnahmeeinrichtung (40) radial verstellbar sind.

10. Anordnung nach Anspruch 9, dadurch gekennzeichnet, dass wenigstens die inneren Trume (80) der Endlosförderbänder (44) in Radialrichtung zur Mittellängsachse (88) der Aufnahmeinrichtung (40) federnd abgestützt sind.

11. Anordnung nach einem der Ansprüche 4 bis 10, dadurch gekennzeichnet, dass die Aufnahmeeinrichtung (100) einen zentralen Dorn (104, 148) zur Aufnahme des gerafften Schlauchhüllenmaterials (128, 164) aufweist.

12. Anordnung nach Anspruch 11, dadurch gekennzeichnet, dass der Dorn als langgestrecktes Rohr (144) mit wenigstens zwei am Umfang verteilten Längsschlitzen (146) ausgebildet ist und dass in dem Rohr (44) längsverschiebliche Elemente (148, 150) zur Lagerung und Steuerung von durch die Längsschlitze (146) radial nach auswärts bewegbaren und entlang der Längsschlitze (146) verschiebbaren Anschlaggliedern (156) enthalten sind.

13. Anordnung nach Anspruch 12, dadurch gekennzeichnet, dass die Anschlagglieder von durch die Längsschlitze (146) herausschwenkbaren Anschlaghebeln (156) gebildet sind.

14. Anordnung nach Anspruch 4, dadurch gekennzeichnet, dass die Aufnahmeeinrichtung eine Anzahl rings um die aufzunehmende Schlauchraupe verteilter langgestreckter Führungsglieder (170) aufweist, auf denen längsverschieblich Elemente (174, 180, 182) zur Lagerung und Steuerung von zwischen den Elementen radial nach einwärts bewegbaren und entlang der Führungsglieder verschiebbaren Anschlaggliedern (178, 184) angeordnet sind.

15. Anordnung nach Anspruch 14, dadurch gekennzeichnet, dass die Anschlagglieder von zwischen den langgestreckten Führungsgliedern in das Innere der Aufnahmeeinrichtung verschwenkbaren Anschlaghebeln (178) gebildet sind.

16. Anordnung nach Anspruch 14, dadurch gekennzeichnet, dass die Anschlagglieder von den freien Enden der Kolbenstangen (184) von Fluidzylindern (182) gebildet sind, die an den Aussenseiten der Führungsglieder (170) längsverschieblich angeordnet sind.

17. Anordnung nach Anspruch 14, dadurch gekennzeichnet, dass die Anschlagglieder von den Ankern von Elektromagneten gebildet sind, die an den Aussenseiten der Führungsglieder (170) längsverschieblich angeordnet sind.

18. Anordnung nach einem oder mehreren der Ansprüche 4 bis 17, dadurch gekennzeichnet, dass die Aufnahmeeinrichtung (40, 100, 144, 170) gesteuert axial verschieblich angeordnet und in einer von der Hüllenöffnungs- und -vorschubeinerichtung (16, 110) zurückgezogenen Stellung zum Verbringen an die Weiterverarbeitungsstelle (14, 138) seitlich wegbewegbar ist.

## Claims

1. A method for opening, axially shirring and separating thin-walled extruded tubular casing material, in particular synthetic skin material for sausage production, to form pleated tubular sections of given length and for the subsequent transfer thereof, counter to the shirring direction, to a further processing station, such as in particular the filling tube of a sausage-stuffing machine, wherein the shirring is effected by advancing the opened tubular casing material against abutment means, characterized in that, only after the start of the advancing movement, the abutment means are caused to act against a part of the tubular material situated at a distance behind the beginning of the tubular section and then in per se known manner they are moved back in the shirring direction in accordance with the increase in length of the pleated tubular section, and in that the separated pleated tubular sections are fed to the further processing station by reversing the movement of the abutment means in the opposite direction.

2. A method according to Claim 1, characterized in that at the start of the advancing movement the tubular casing material is gripped at one leading end and is drawn in advancing direction until the abutment means are brought into action at a speed corresponding to the advancing movement.

3. A method according to Claim 1 or 2, characterized in that, after being separated from the lenght, the tubular casing material is closed in the unshirred leading zone, before the pleated tubular section is fed to the further processing station.

4. An arrangement for carrying out the method according to one of Claims 1 to 3, having a casing opening and advancing device (16, 110) comprising a shirring implement (20) and a floating shirring tube (18), with a receiving device (40, 100, 144, 170) which can be attached to the latter device and which is provided with abutments (56, 132, 156, 178, 184) for the advanced tubular casing material (70, 128, 164), a separating device (60, 130) for severing from the length of tubular casing the pleated tubular section (78, 136) received by the receiving device, and also means (38, 42) for moving the receiving device with the separated pleated tubular section in front of the further processing station (14, 138), characterized in that the abutments (56, 132, 156, 178, 184) are disposed so that they are radially guided and axially movable on the receiving device (40, 100, 144, 170).

5. An arrangement according to Claim 4, characterized in that the receiving device (40, 100) has at least two synchronously drivable endless conveyor belts (44, 102) receiving between them the pleated tubular sections (78, 136) during shirring.

6. An arrangement according to Claim 5, characterized in that co-rotating abutment members (56, 132) are disposed on the endless conveyor belts (44, 102), which at the reversal points (48) of the conveyor belts can be swung out from the inner zone of the receiving device (40, 100).

7. An arrangement according to Claim 5 or 6, characterized in that co-rotating fingers (58, 134) are disposed on the endless conveyor belts (44, 102) for gripping the leading end (76) of the tubular section, and in that the speed of the endless conveyor belts (44, 102) can be switched between a value corresponding to the advance speed of the tubular casing material (70, 128) and a value corresponding to the increase in length of the shirred pleated section (78, 136).

8. An arrangement according to one of Claims 5 to 7, characterized in that on their outsides the endless conveyor belts (44, 102) are toothed or grooved or are of otherwise profiled shape.

9. An arrangement according to one of Claims 5 to 8, characterized in that the endless conveyor belts (44) are radially adjustable in relation to the central longitudinal axis (88) of the receiving device (40).

10. An arrangement according to Claim 9, characterized in that at least the inner stretches (80) of the endless conveyor belts (44) are resiliently supported in radial direction relative to the central longitudinal axis (88) of the receiving device (40).

11. An arrangement according to one of Claims 4 to 10, characterized in that the receiving device (100) has a central mandrel (104, 148) for receiving the pleated tubular casing material (128, 164).

12. An arrangement according to Claim 11, characterized in that the mandrel is in the form of an elongate tube (144) with at least two longitudinal slots (146) spaced apart on the periphery, and in that longitudinally displaceable elements (148, 150) are contained within the tube (144) for mounting and controlling abutment members (156) which ar movable radially outwards through the longitudinal slots (146) and which are displaceable along the longitudinal slots (146).

13. An arrangement according to Claim 12, characterized in that the abutment members are formed by abutment levers (156) which can be swung out through the longitudinal slots (146).

14. An arrangement according to Claim 4, characterized in that the receiving device has a number of elongate guide members (170) which are spaced around the pleated tubular section to be received and on which are disposed longitudinally displaceable elements (174, 180, 182) for mounting and controlling abutment member (178, 184) which are movable radially inwards between the elements and which are displaceable along the guide members.

15. An arrangement according to Claim 14, characterized in that the abutment members are formed by abutment levers (178) which can be swung between the elongate guide members into the interior of the receiving device.

16. An arrangement according to Claim 14, characterized in that the abutment members are formed by the free ends of the piston rods (184) of fluid-operated cylinders (182), which are disposed longitudinally displaceably on the outsides of the guide members (170).

17. An arrangement according to Claim 14, characterized in that the abutment members are formed by the armatures of electromagnets, which are disposed longitudinally displaceably on the outsides of the guide members (170).

18. An arrangement according to one or more of Claims 4 to 17, characterized in that the receiving device (40, 100, 144, 170) is arranged to be guided axially displaceably and in a position retracted from the casing opening and the advancing device (16, 110) can be moved away laterally for transfer to the further processing station (14, 138).

## Revendications

1. Procédé pour ouvrir, plisser axialement et séparer des boyaux tubulaires à paroi mince, notamment des boyaux synthétiques pour la fabrication de saucisses, pour obtenir des chapelets de boyau de longueur déterminée et transférer ensuite les chapelets tubulaires ainsi formés, à l'encontre du sens de plissage, vers un autre poste de travail où se trouve en particulier le tube de remplissage d'une machine à remplir les saucisses, le plissage s'effectuant en faisant avancer le boyau contre un moyen de butée, ce procédé étant caractérisé par le fait que ce moyen de butée n'est actionné qu'après le commencement du mouvement d'avance à un endroit situé à une certaine distance derrière l'extrémité antérieure du boyau, après quoi, d'une manière connue en soi, le chapelet tubulaire est déplacé vers l'arrière en fonction de la diminution de longueur du chapelet dans le sens du plissage, et que les chapelets séparés sont dirigés vers ledit autre poste de travail dans le sens contraire par inversion du sens de déplacement de l'organe de butée.

2. Procédé selon la revendication 1, caractérisé par le fait que le boyau, pour amorcer le mouvement d'avance, est saisi par son extrémité avant, puis tiré dans le sens de l'avance à une vitesse qui correspond à celle de l'avance, jusqu'au moment où l'organe de butée devient actif.

3. Procédé selon l'une ou l'autre des revendications 1 ou 2, caractérisé par le fait que le boyau, après la séparation des chapelets, est fermé à son extrémité avant non plissée, avant d'être transféré à un autre poste de travail.

4. Installation pour la mise en œuvre du procédé selon l'une quelconque des revendications 1 à 3, laquelle comprend un dispositif (16, 110) d'ouverture et d'avance des boyaux, équipé d'un outil de plissage (20) et d'un tube flottant de plissage (18), un dispositif de préhension (40, 100, 144, 170) pouvant être accouplé au précédent, équipé de butées (56, 132, 156, 178, 184) pour le boyau avancé, un dispositif de séparation (60, 130) pour détacher du boyau la partie plissée (78, 136) saisie par le dispositif de préhension, ainsi que des moyens (38, 42) pour faire défiler le dispositif de préhension avec le boyau séparé devant le poste de travail suivant (14, 138), cette installation étant caractérisée par le fait que les butées (56, 132, 156, 178, 184) sont disposées sur le dispositif de préhension (40, 100, 144, 170) et de commande de façon qu'elles puissent se déplacer radialement et axialement.

5. Installation selon la revendication 4, caractérisée par le fait que le dispositif de préhension (40, 100) comprend au moins deux bandes sans fin d'entraînement (44, 102) pouvant être actionnées en synchronisme et recevoir entre elles le boyau (78, 136) pendant l'opération de plissage.

6. Installation selon la revendication 5, caractérisée par le fait qu'il est prévu sur les bandes sans fin d'entraînement (44, 102) des organes de butée (56, 132) qui, aux points d'inversion (48) du sens de défilement des bandes sans fin d'entraînement, peuvent pasculer vers l'extérieur de la zone interne du dispositif de préhension (40, 100).

7. Installation selon l'une ou l'autre des revendications 5 ou 6, caractérisée par le fait qu'il est prévu sur les bandes sans fin d'entraînement (44, 102) des doigts (58, 134) qui se déplacent avec ces bandes et servent à saisir la partie initiale (76) du boyau, et que la vitesse de défilement des bandes sans fin d'entraînement (44, 102) peut être commutée entre une valeur qui correspond à la vitesse d'avance du boyau tubulaire (70, 128) et une valeur qui correspond à l'accroissement de longueur du chapelet plissé (78, 136).

8. Installation selon l'une quelconque des revendications 5 à 7, caractérisée par le fait que les bandes sans fin d'entraînement (44, 102) présentent sur leur face extérieure des dents ou cannelures, ou tout autre profilage analogue.

9. Installation selon l'une quelconque des revendications 5 à 8, caractérisée par le fait que les bandes sans fin d'entraînement (44) sont réglables radialement par rapport à l'axe longitudinal médian (88) du dispositif de préhension (40).

10. Installation selon la revendication 9, caractérisée par le fait qu'au moins les brins intérieurs (80) des bandes sans fin d'entraînement (44) sont supportés élastiquement dans le sens radial par rapport à l'axe longitudinal médian (88) du dispositif de préhension (40).

11. Installation selon l'une quelconque des revendications 4 à 10, caractérisée par le fait que le dispositif de préhension (100) comporte une tige centrale (104, 148) pour saisir le boyau tubulaire plissé (128, 164).

12. Installation selon la revendication 11, caractérisée par le fait que la tige est constituée par un tube (144) qui s'étend longitudinalement et présente au moins deux fentes longitudinales (146) réparties sur sa périphérie et qu'à l'intérieur de ce tube (144) sont logés des éléments (148, 150) qui peuvent coulisser longitudinalement et servent à supporter et commander des organes de butée (156) pouvant se déplacer radialement vers l'extérieur à travers les fentes longitudinales précitées (146) et coulisser le long de ces fentes.

13. Installation selon la revendication 12, caractérisée par le fait que les organes de butée sont constitués par des leviers de butée (156) pouvant basculer vers l'extérieur à travers les fentes longitudinales (146).

14. Installation selon la revendication 4, caractérisée par le fait que le dispositif de préhension comporte un certain nombre d'organes de guidage (170) à orientation longitudinale, répartis circulairement autour du chapelet de boyaux tubulaires et sur lesquels sont disposés des éléments (174, 180, 182) pouvant coulisser longitudinalement afin de supporter et orienter des organes de butée (178, 184) qui peuvent se déplacer radialement vers l'intérieur entre ces éléments, le long des organes de guidage précités (170).

15. Installation selon la revendication 14, caractérisée par le fait que les organes de butée sont constitués par des leviers de butée (178) pouvant basculer entre les organes de guidage à orientation longitudinale à l'intérieur du dispositif de préhension.

16. Installation selon la revendication 14, caractérisée par le fait que les organes de butée sont constitués par les extrémités libres de tiges de pistons (184) de vérins hydrauliques (182), lesquelles sont disposées de façon à pouvoir coulisser longitudinalement sur la face extérieure des organes de guidage (170).

17. Installation selon la revendication 14, caractérisée par le fait que les organes de butée sont constitués par les armatures d'électro-aimants disposées de façon à pouvoir coulisser longitudinalement sur le côté extérieur des organes de guidage (170).

18. Installation selon l'une quelconque des revendications 4 à 17, caractérisée par le fait que le dispositif de préhension (40, 100, 144, 170) est disposé de façon à pouvoir être actionné par coulissement axial et à pouvoir également s'escamoter latéralement dans une position en retrait par rapport au dispositif d'ouverture et d'avance du boyau (16, 110) afin de parvenir au poste de travail suivant (14, 138).

FIG. 1

FIG.3

FIG.2

FIG.4a

FIG.4b

FIG.4c

FIG.4d

FIG.4e

FIG. 5

FIG. 6

FIG. 7a

FIG. 7b

FIG. 7c

FIG. 7d

0 110 341

**F I G. 8a**

**F I G. 8b**

**F I G. 8c**

**F I G. 8d**

19

FIG.9

FIG.10

FIG.11